# EUROPEAN PATENT APPLICATION

(11) **EP 4 682 376 A1**
(43) Date of publication of application: **21.01.2026**
(21) Application number: 23928888.9
(22) Date of filing: 05.12.2023
(51) Int. Cl.: F03D 3/00, F03D 3/06, F03D 9/25, F03D 7/06

(54) **WIND POWER GENERATION APPARATUS**

(30) Priority: 17.03.2023 KR 20230035256
(71) Applicant: Jeon, Young June, Seoul 16897 (KR)
(72) Inventor: Jeon, Young June, Seoul 16897 (KR)
(74) Representative: Jacobi, Markus Alexander
(86) International application number: PCT/KR2023/019844
(87) International publication number: WO 2024/195964

(57) **Abstract**

A wind power generation apparatus of the present invention comprises: a frame part including a plurality of upper horizontal frames each being connected by one end and the other end thereof so as to be arranged in a pentagonal structure, a plurality of upper support frames each having one end connected to each vertex of the upper horizontal frames and having the other ends gathered together in the upward direction and connected, side frames each having one end connected to each vertex of the upper horizontal frames and arranged in the downward direction, a plurality of lower horizontal frames each being connected by one end and the other end thereof so as to be arranged in a pentagonal structure, being arranged to be spaced apart below the upper horizontal frames, and having respective vertices to which each of the other ends of the side frames is connected, and a plurality of lower support frames each having one end connected to each vertex of the lower horizontal frames and having the other ends gathered together in the downward direction and connected; a rotary shaft to which the other ends of the upper support frames and the other ends of the upper support frames are connected, and which rotates integrally with the frame part by means of the wind; and a generator for generating electricity by means of the rotation of the rotary shaft.

## Description

### [Technical Field]

The present invention relates to a wind power generation apparatus.

### [Background Art]

In general, power generation systems are systems that rotate blades by using fluid dynamics properties of kinetic energy of an air or water flow to convert the kinetic energy into mechanical energy, and rotate a generator by the mechanical energy to obtain electricity.

In other words, due to the use of fossil fuels such as coal or petroleum, large amounts of carbon dioxide may accumulate in the atmosphere so as to form a thick layer of carbon dioxide, causing global warming. In addition, due to an increase in the rapidly changing price of crude oil, the need for alternative energy has become known so that research and development on power generation from natural energy is expanding.

The power generation systems are systems that supply induced electricity generated by converting a force of a fluid into a rotational force to power grids or consumers. Depending on the shaft orientation, the power generation systems may be classified into a horizontal axis wind turbine (HAWT) such as propeller-type power generation systems, a vertical axis wind turbine (VAWT) such as gyromill-type and Darrieus-type power generation systems, and the like. Compared to nuclear, hydroelectric, and thermal power generation systems, the power generation systems are very economical in terms of installation costs and installation areas, and do not cause environmental pollution.

In other words, the HAWT has propeller blades to use a lift force of a fluid, in which power generation efficiency is high due to a high rotational speed of a rotation blade, whereas a direction of the rotation blade has to be changed according to a wind direction, and an angle of the rotation blade has to be changed according to a wind speed, so that a complex device is required.

In contrast, according to the VAWT, power generation efficiency is low, whereas a high rotational force may be obtained even at a low wind speed, and the VAWT does not depend greatly on a wind direction, so that the VAWT is frequently and widely applied to small power generation systems.

Such a power generation system may include a movable body rotatably installed on an upper portion of a tower in a left-right direction, a blade installed at a front end of the movable body so as to be rotated by a fluid, a step-up gearbox for accelerating a rotational force of the blade, a generator for converting the rotational force accelerated by the step-up gearbox into electrical energy, and the like.

According to the generator configured as described above, when the blade is rotated by a wind, the rotational force of the blade is accelerated by the step-up gearbox. In addition, the generator generates the electrical energy through the accelerated rotational force, and the electrical energy is applied to an electric storage device or the like so as to be electrically stored, or directly applied to a user.

In addition, the VAWT is being developed while being broadly classified into gyromill and Darrieus types, which are driven by a lift force of the wind, and a Savonius type, which is driven by a drag force, based on a blade rotation scheme.

In other words, a Darrieus blade uses a lift force of a fluid so that the Darrieus blade may not initially move on its own, requiring an auxiliary power device. A Savonius blade uses a drag force of a fluid so that a rotational speed may not be higher than a wind speed, whereas a high rotational force may be obtained at a low wind speed, and the Savonius blade has its own moving force, and thus the Savonius blade is mainly utilized in small power generation systems.

In this case, since electricity is generated by rotating various blades by using the wind, a technology for supporting the blades rotated by the wind in a structurally stable manner while reducing a weight of the blade is required.

In particular, the blades have to be located at a high altitude, which is close to a steady flow having a fluid flow in which a speed, a pressure, a direction, and the like are not changed over time.

However, in order to locate the blades at a high altitude, a support device having a sufficient height is required, and a fixing structure having sufficient rigidity to fix the support device to the ground is required, so that excessive installation costs and installation areas are required, there is a high risk of damage caused by strong winds, and there are many difficulties in maintenance/repair of the generator and major components.
(Patent Document 1) Korean Unexamined Utility Model Publication No. 20-2010-0005349
(Patent Document 2) Korean Unexamined Patent Publication No. 10-2022-0058820
(Patent Document 3) Korean Patent Registration No. 10-1915220
(Patent Document 4) Korean Patent Registration No. 10-1063995

### [Disclosure]

### [Technical Problem]

An object of the present invention devised to solve the problems described above is to provide a wind power generation apparatus in which a blade part may be provided, and a self-rotating frame part may have a triangular structure formed through a truss structure, and may be formed in a pentagonal pyramid shape where one vertex is used to form five triangles, so that a maintenance cost may be reduced due to firmness of the frame part, and mass power generation through multiple installations may be enabled due to reduction of an installation cost and minimization of an installation area.

In addition, an object of the present invention is to provide a wind power generation apparatus in which a shape of a blade part may be adjusted so as to adjust rotation of a rotary shaft to be constant according to strong winds and weak winds, and a frame part may be formed so as to obtain a rotational force through a lift force in addition to the blade part that obtains a rotational force through a drag force, so that a horizontal axis wind turbine (HAWT) and a vertical axis wind turbine (VAWT) may be integrated to generate electricity.

### [Technical Solution]

To achieve the objects described above, according to the present invention, a wind power generation apparatus includes: a frame part including a plurality of upper horizontal frames having one ends and opposite ends connected to each other so as to be arranged in a pentagonal structure, a plurality of upper support frames, each having one end connected to each vertex of the upper horizontal frames, and having opposite ends gathered together in an upward direction so as to be connected, side frames, each having one end connected to each vertex of the upper horizontal frames, and arranged in a downward direction, a plurality of lower horizontal frames having one ends and opposite ends connected to each other so as to be arranged in a pentagonal structure, spaced apart below the upper horizontal frames, and having respective vertices to which each of opposite ends of the side frames is connected, and a plurality of lower support frames, each having one end connected to each vertex of the lower horizontal frames, and having opposite ends gathered together in the downward direction so as to be connected; a rotary shaft to which the opposite ends of the upper support frames and the opposite ends of the lower support frames are connected, and configured to rotate integrally with the frame part by a wind; and a generator for generating electricity by the rotation of the rotary shaft.

In addition, the vertex of the lower horizontal frames may be located between adjacent vertices of the upper horizontal frames, the side frames may be provided in a zigzag pattern so as to diagonally connect each vertex of the upper horizontal frames and each vertex of the lower horizontal frames, and one ends of two side frames may be connected to each vertex of the upper horizontal frames and opposite ends of two side frames may be connected to each vertex of the lower horizontal frames.

In addition, the wind power generation apparatus may further include: a blade part including a first blade connected to both ends of the side frame inclined in one direction and the opposite end of the upper support frame, and configured to generate a rotational force by a drag force of the wind, and a second blade connected to both ends of the side frame inclined in an opposite direction and the opposite end of the lower support frame, and configured to generate a rotational force by a drag force of the wind, and the rotary shaft may be rotated by the rotational force generated by the drag force of the wind.

In addition, the upper support frames, the lower support frames, and the side frames may have side surfaces that convexly protrude so as to generate a rotational force by a lift force of the wind.

In addition, the blade part may further include: first and second wires having one ends connected to centers of the first and second blades, respectively; first and second winding parts provided on the frame part, and to which opposite ends of the first and second wires are connected, respectively; a wind speed measurement unit for measuring a wind speed; and a control unit for winding the first wire and the second wire around the first winding part and the second winding part so as to concavely form one side surfaces of the first blade and the second blade, respectively, when the wind speed measured by the wind speed measurement unit is less than or equal to a preset wind speed.

In addition, the side frame may have a longitudinal cut groove that connects the one end and the opposite end of the side frame, a coupling groove having a width that is greater than a width of the cut groove may be formed inside the cut groove, a first concavo-convex part having repeated protrusions and recesses may be formed on side surfaces of the cut groove, and a second concavo-convex part coupled to the first concavo-convex part may be formed on both side surfaces of the one end of each of the first and second blades so as to be slidably coupled to the cut groove, while a fixing sill slidably coupled to the coupling groove and latched and fixed to the cut groove is formed at the one end of each of the first and second blades.

In addition, the blade part may further include: a first elastic member that connects a first connection point of the first blade connected to the opposite end of the upper support frame and the opposite end of the upper support frame; a second elastic member that connects a second connection point of the second blade connected to the opposite end of the lower support frame and the opposite end of the lower support frame; and a rotary motor for rotating the side frames, and the control unit may control the rotary motor to rotate the side frames in one direction so that the first blade and the second blade are wound around the side frames so as to have reduced areas while the first elastic member and the second elastic member expand, and to rotate the side frames in an opposite direction so that the first elastic member and the second elastic member contract, and the first blade and the second blade are released from the side frames so as to have expanded areas.

### [Advantageous Effects]

Regarding an effect of the present invention as discussed above, a wind power generation apparatus can be provided in which a blade part may be provided, and a self-rotating frame part may have a triangular structure formed through a truss structure, and may be formed in a pentagonal pyramid shape where one vertex is used to form five triangles, so that a maintenance cost can be reduced due to firmness of the frame part, and mass power generation through multiple installations can be enabled due to reduction of an installation cost and minimization of an installation area.

In addition, regarding an effect of the present invention, a wind power generation apparatus can be provided in which a shape of a blade part can be adjusted so as to adjust rotation of a rotary shaft to be constant according to strong winds and weak winds, and a frame part can be formed so as to obtain a rotational force through a lift force in addition to the blade part that obtains a rotational force through a drag force, so that a horizontal axis wind turbine (HAWT) and a vertical axis wind turbine (VAWT) can be integrated to generate electricity.

### [Description of Drawings]

FIG. 1 is a perspective view showing a wind power generation apparatus according to an exemplary embodiment of the present invention.
FIG. 2 is a plan view showing the wind power generation apparatus according to the exemplary embodiment of the present invention.
FIGS. 3 to 9 are views showing a frame part of the wind power generation apparatus according to the exemplary embodiment of the present invention.
FIGS. 10 and 11 are perspective views showing the frame part and a blade part of the wind power generation apparatus according to the exemplary embodiment of the present invention.
FIG. 12 is a sectional view showing coupling relation among a side frame and first and second blades of the wind power generation apparatus according to the exemplary embodiment of the present invention.

### [Description of Reference Numerals]

100: Frame part 110: Upper horizontal frame
120: Upper support frame 130: Side frame
131: Cut groove 132: Coupling groove
133: First concavo-convex part 140: Lower horizontal frame
150: Lower support frame 160: Blade part
161: First blade 162: Second blade
163: Second concavo-convex part 164: Fixing sill
165: First elastic member 166: Second elastic member
200: Rotary shaft 300: Generator

### [Best Mode]

Advantages and features of the present invention and methods for accomplishing the same will be understood more readily with reference to the following detailed description of embodiments taken in conjunction with the accompanying drawings. However, the present invention can be implemented in various other forms without being limited to the embodiments disclosed below. The present embodiments are merely provided so that the disclosure of the present invention will be thorough and complete, and will fully convey the scope of the invention to a person having ordinary skill in the art to which the present invention pertains. The present invention is only defined by the scope of the claims. Like reference numerals refer to like elements throughout the present disclosure.

Hereinafter, the present invention will be described with reference to drawings for describing a wind power generation apparatus according to embodiments of the present invention.

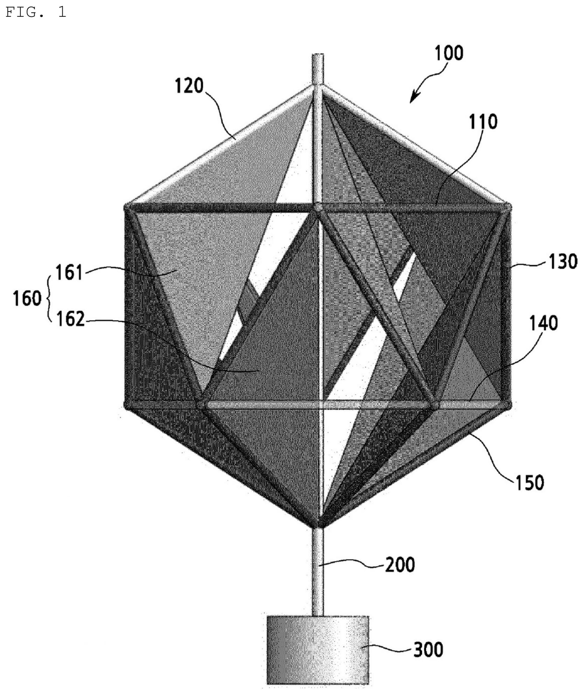

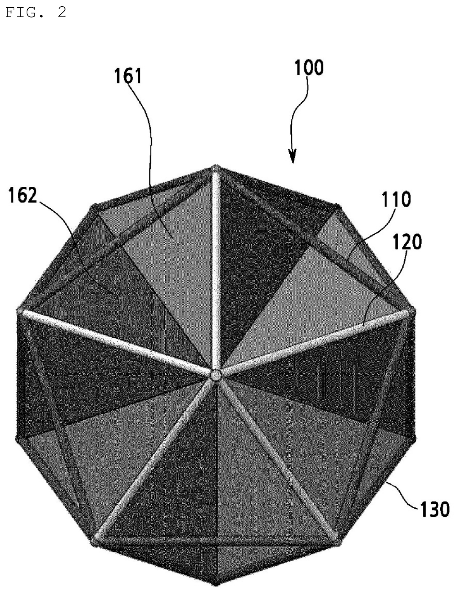

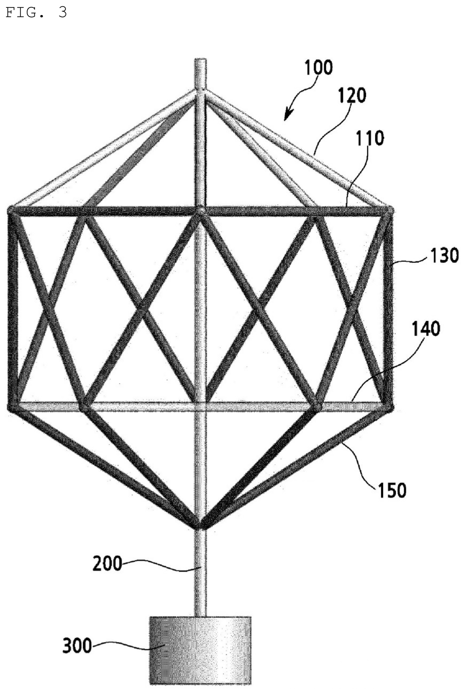

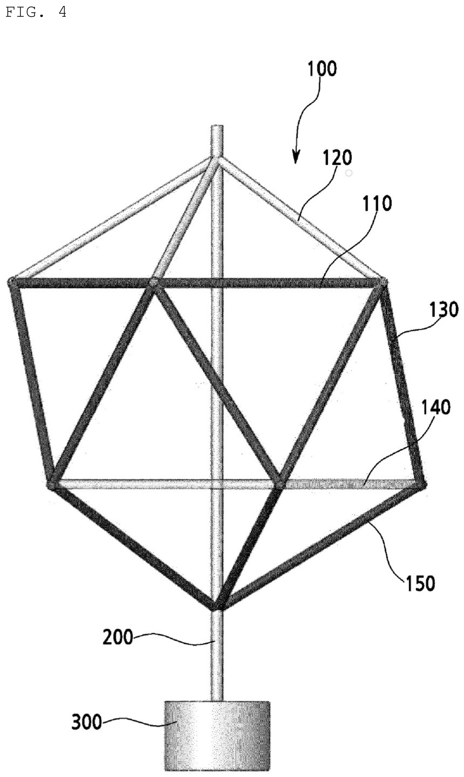

Referring to FIGS. 1 to 4, a wind power generation apparatus according to the present invention may include a frame part 100, a rotary shaft 200, and a generator 300.

First, the frame part 100 may form a three-dimensional structure by using a plurality of frames.

In this case, the frame part 100 may be formed as a three-dimensional sphere by utilizing a truss structure, but is not limited thereto.

Accordingly, in order to have a three-dimensional truss structure, the frame part 100 may include an upper horizontal frame 110, an upper support frame 120, a side frame 130, a lower horizontal frame 140, and a lower support frame 150.

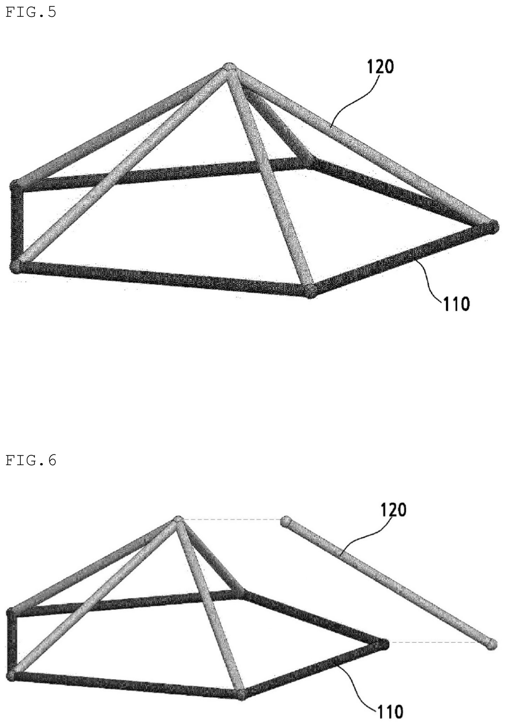

Referring to FIGS. 5 and 6, a plurality of upper horizontal frames 110 may have one ends and opposite ends connected to each other so as to be arranged in a pentagonal structure. In other words, five upper horizontal frames 110 may be provided. In this case, the pentagonal structure may have a pentagonal shape.

A plurality of upper support frames 120 may be provided such that each of the upper support frames 120 may have one end connected to each vertex of the upper horizontal frames 110, and the upper support frames 120 may have opposite ends gathered together in an upward direction so as to be connected. In other words, five upper support frames 120 may be provided.

In this case, the upper support frames 120 may be arranged and connected in a pentagonal pyramid shape in an upper portion of the upper horizontal frame 110.

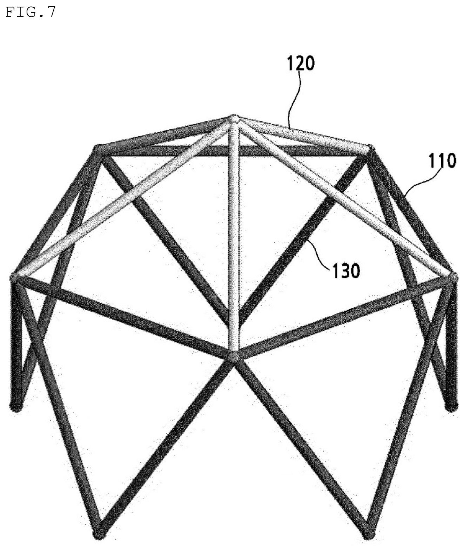

Referring to FIG. 7, side frames 130 may be provided such that each of the side frames 130 may have one end connected to each vertex of the upper horizontal frames 110, and the side frames 130 may be arranged in a downward direction of the upper horizontal frame 110.

In this case, the side frames 130 may be configured such that two one ends of the side frames 130 may be connected to each vertex of the upper horizontal frames 110, and one opposite end of the side frame 130 may be connected to a vertex of the lower horizontal frames 140, which will be described below.

In other words, the side frames 130 may be arranged to have a triangular structure by connecting respective vertices of the upper horizontal frames 110 and the lower horizontal frames 140.

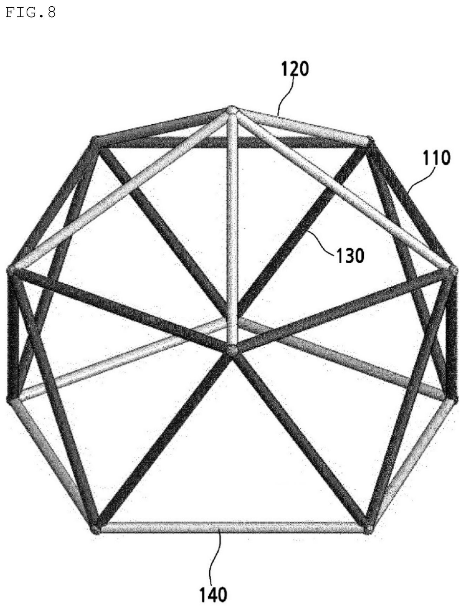

Referring to FIG. 8, a plurality of lower horizontal frames 140 may have one ends and opposite ends connected to each other so as arranged in a pentagonal structure, that is, a pentagon. In this case, five lower horizontal frames 140 may be provided.

In this case, the lower horizontal frames 140 may be spaced apart below the upper horizontal frames 110.

In addition, the vertex of the lower horizontal frames 140 may be located between adjacent vertices of the upper horizontal frames 110. Accordingly, the side frames 130 described above may be diagonally provided.

In addition, the lower horizontal frames 140 may have respective vertices to which each of opposite ends of the side frames 130 is connected.

In this case, based on each vertex of the lower horizontal frames 140, two opposite ends of the side frames 130 may be connected to each vertex of the lower horizontal frames 140, and the side frames 130 may be connected to the vertices of the upper horizontal frames 110 located in an upper portion of the side frame 130, that is, the two vertices located on both sides of the upper portion, respectively.

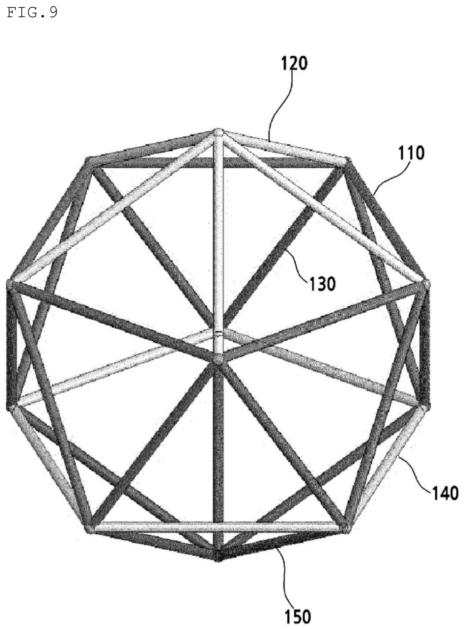

Referring to FIG. 9, a plurality of lower support frames 150 may be provided such that each of the lower support frames 150 may have one end connected to each vertex of the lower horizontal frames 140, and the lower support frames 150 may have opposite ends gathered together in the downward direction so as to be connected. In other words, five lower support frames 150 may be provided, and may be arranged in a pentagonal pyramid shape in a lower portion of the lower horizontal frame 140.

In this case, the side frames 130 may be provided in a zigzag pattern so as to diagonally connect each vertex of the upper horizontal frames 110 and each vertex of the lower horizontal frames 140.

In addition, one ends of two side frames 130 may be connected to each vertex of the upper horizontal frames 110 and opposite ends of two side frames 130 may be connected to each vertex of the lower horizontal frames 140.

The frame part 100 described above may be configured such that a plurality of frames may have one ends and opposite ends connected to each other so as to form a sphere. In addition, each vertex of the frame part 100 may be formed in a pentagonal pyramid structure formed by the frames.

Therefore, the frame part 100 may be firmly provided in a truss structure by using frames having the same length (the upper horizontal frames 110, the upper support frames 120, the side frames 130, the lower horizontal frames 140, and the lower support frames 150). In addition, the center of gravity may be located on the same vertical line so that structural stability may be improved. Further, since a load is appropriately distributed to form a stable structure, high-speed rotation of the frame part 100 may be performed integrally with the rotary shaft 200, and the frame part 100 may be firmly connected to the rotary shaft 200.

Meanwhile, the upper support frames 120, the lower support frames 150, and the side frames 130 may have side surfaces that convexly protrude so as to generate a rotational force by a lift force of a wind.

For example, the upper support frames 120, the lower support frames 150, and the side frames 130 may have an airplane wing structure.

The rotary shaft 200 may be configured such that the opposite ends of the upper support frames 120 and the opposite ends of the lower support frames 150 may be connected to the rotary shaft 200, and the rotary shaft 200 may rotate integrally with the frame part 100 by a wind.

The generator 300 may generate electricity by the rotation of the rotary shaft 200.

In this case, since a scheme of generating electricity by the rotation of the rotary shaft 200 is a known technology, detailed descriptions thereof will be omitted.

Meanwhile, the wind power generation apparatus according to the present invention may further include a blade part 160.

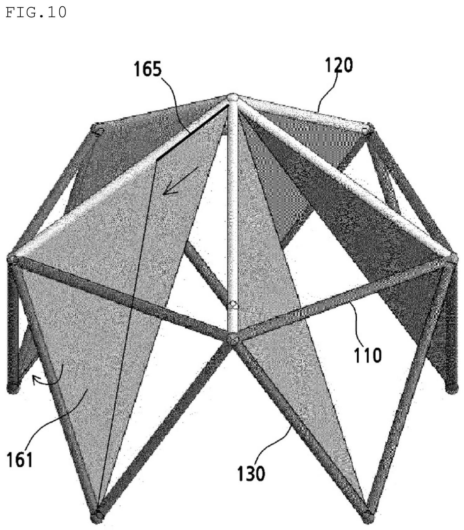

Referring to FIG. 10, the blade part 160 may include a first blade 161 and a second blade 162, which generate rotational forces by drag forces.

The first blade 161 may be connected to both ends of the side frame 130 inclined in one direction and the opposite end of the upper support frame 120.

In this case, the first blade 161 may be slidably fitted and coupled to the side frame 130. In addition, the first blade 161 may be connected by a first elastic member 165 that connects a first connection point of the first blade 161 connected to the opposite end of the upper support frame 120 and the opposite end of the upper support frame 120. For example, when the side frame 130 is rotated, the first blade 161 may be wound around the side frame 130, and the first elastic member 165 may expand. In addition, when the side frame 130 is rotated in an opposite direction, the first blade 161 may be released from the side frame 130 while the first elastic member 165 contracts so as to return to an original state.

In addition, the first blade 161 may be formed of a material such as cloth, but is not limited thereto.

In addition, a plurality of first blades 161, for example, five first blades 161 may be arranged in a circle around the rotary shaft 200.

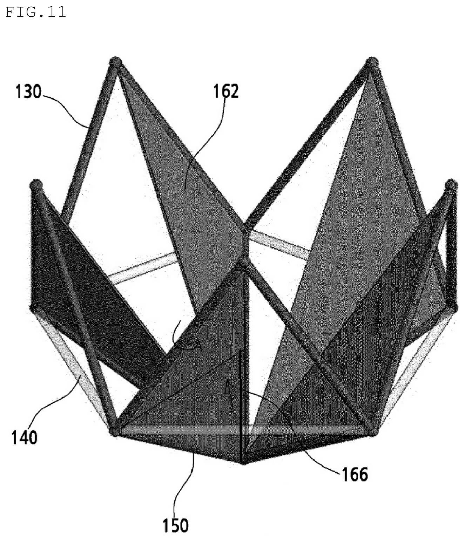

Referring to FIG. 11, the second blade 162 may be connected to both ends of the side frame 130 inclined in an opposite direction and the opposite end of the lower support frame 150.

In this case, the second blade 162 may be slidably fitted and coupled to the side frame 130. In addition, the second blade 162 may be connected by a second elastic member 166 that connects a second connection point of the second blade 162 connected to the opposite end of the lower support frame 150 and the opposite end of the lower support frame 150. For example, when the side frame 130 is rotated, the second blade 162 may be wound around the side frame 130, and the second elastic member 166 may expand. In addition, when the side frame 130 is rotated in an opposite direction, the second blade 162 may be released from the side frame 130 while the second elastic member 166 contracts so as to return to an original state.

In addition, the second blade 162 may be formed of a material such as cloth, but is not limited thereto.

In addition, a plurality of second blades 162, for example, five second blades 162 may be arranged in a circle around the rotary shaft 200.

Each of the first blade 161 and the second blade 162 described above may generate a rotational force by a drag force of the wind.

In addition, the frame part 100 and the rotary shaft 200, which are provided integrally with each other, may be rotated by the rotational force generated by the drag force of the wind.

Meanwhile, the blade part 160 may further include a first wire, a second wire, a first winding part, a second winding part, a wind speed measurement unit, and a control unit.

The first wire may have one end connected to a center of the first blade 161.

The second wire may have one end connected to a center of the second blade 162.

The first winding part may be provided on the frame part 100, and an opposite end of the first wire may be connected to the first winding part.

The second winding part may be provided on the frame part 100, and an opposite end of the second wire may be connected to the second winding part.

The wind speed measurement unit may measure a wind speed.

The control unit may wind the first wire and the second wire around the first winding part and the second winding part so as to concavely form one side surfaces of the first blade 161 and the second blade 162, respectively, when the wind speed measured by the wind speed measurement unit is less than or equal to a preset wind speed.

Accordingly, even when a small drag force is applied to the first blade 161 and the second blade 162, since the one side surfaces of the first blade 161 and the second blade 162 are concavely formed, the rotational forces may be obtained.

In addition, the blade part 160 may further include a first elastic member 165, a second elastic member 166, and a rotary motor.

The first elastic member 165 may connect the first connection point of the first blade 161 connected to the opposite end of the upper support frame 120 and the opposite end of the upper support frame 120.

The second elastic member 166 may connect the second connection point of the second blade 162 connected to the opposite end of the lower support frame 150 and the opposite end of the lower support frame 150.

The rotary motor may rotate the side frames 130.

In this case, the side frame 130 may be configured such that a portion between both ends of the side frame 130 may be rotatably provided.

In this case, the control unit may rotate the side frames 130 in one direction so that the first blade 161 and the second blade 162 may be wound around the side frames 130 so as to have reduced areas while the first elastic member 165 and the second elastic member 166 expand. For example, when the rotation has a speed that is greater than or equal to a preset speed due to a strong wind speed, the control unit may control the rotary motor to reduce a drag force.

In addition, the control unit may rotate the side frames 130 in an opposite direction so that the first elastic member 165 and the second elastic member 166 contract, and the first blade 161 and the second blade 162 may be released from the side frames 130 so as to have expanded areas. For example, when the rotation has a speed that is less than or equal to the preset speed due to a weak wind speed, the control unit may control the rotary motor to increase a drag force.

In addition, a plurality of rotary motors may be provided to rotate the side frames 130 to which the first blade 161 and the second blade 162 are coupled, respectively. Further, the control unit may control each of the rotary motors.

For example, the control unit may control the side frames 130 to reduce the area of the first blade 161 or expand the area of the second blade 162.

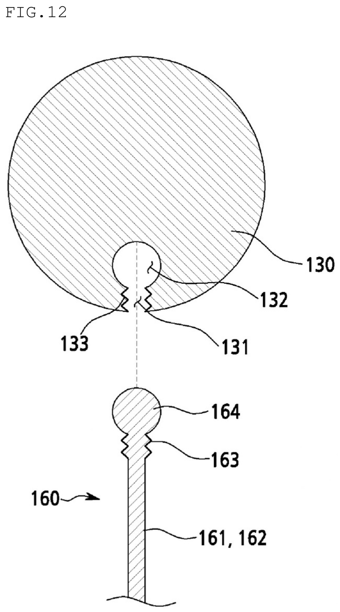

Meanwhile, referring to FIG. 12, the side frame 130 may have a longitudinal cut groove 131 that connects the one end and the opposite end of the side frame 130.

A coupling groove 132 having a width that is greater than a width of the cut groove 131 may be formed inside the cut groove 131.

In addition, a first concavo-convex part 133 having repeated protrusions and recesses may be formed on side surfaces of the cut groove 131.

In this case, a second concavo-convex part 163 coupled to the first concavo-convex part 133 may be formed on both side surfaces of the one end of each of the first blade 161 and the second blade 162 so as to be slidably coupled to the cut groove 131.

In addition, a fixing sill 164 slidably coupled to the coupling groove 132 and latched and fixed to the cut groove 131 may be formed at the one end of each of the first blade 161 and the second blade 162.

Accordingly, the first blade 161 and the second blade 162 may be wound around the side frames 130 when the side frames 130 are rotated.

In addition, due to a latching structure of the fixing sill 164 and the cut groove 131 and a coupling structure of the first concavo-convex part 133 and the second concavo-convex part 163, the first and second blades 161 and 162 and the side frames 130 may be firmly coupled to each other even in strong winds.

It will be understood by a person having ordinary skill in the art to which the present invention pertains that the present invention can be embodied in other specific forms without changing the technical idea or essential characteristics of the present invention. Therefore, the embodiments described above are to be understood as illustrative in all aspects, and not restrictive. The scope of the present invention is defined by the claims set forth below rather than the detailed description above, and the scope of the present invention is to be interpreted as encompassing all changes or modifications derived from the meaning and scope of the claims and equivalent concepts thereof. In addition, an operational sequence of configurations described in the above-described process does not necessarily have to be performed in chronological order, and even when an execution sequence of respective configurations and steps is changed, such a process satisfying the gist of the present invention may fall within the scope of the present invention.

## Claims

1. A wind power generation apparatus comprising:
a frame part including
a plurality of upper horizontal frames having one ends and opposite ends connected to each other so as to be arranged,
a plurality of upper support frames, each having one end connected to each vertex of the upper horizontal frames, and having opposite ends gathered together in an upward direction so as to be connected,
side frames, each having one end connected to each vertex of the upper horizontal frames, and arranged in a downward direction,
a plurality of lower horizontal frames having one ends and opposite ends connected to each other so as to be arranged, spaced apart below the upper horizontal frames, and having respective vertices to which each of opposite ends of the side frames is connected, and
a plurality of lower support frames, each having one end connected to each vertex of the lower horizontal frames, and having opposite ends gathered together in the downward direction so as to be connected;
a rotary shaft to which the opposite ends of the upper support frames and the opposite ends of the lower support frames are connected, and configured to rotate integrally with the frame part by a wind;
a generator for generating electricity by the rotation of the rotary shaft; and
a blade part including at least one of
a first blade connected to both ends of the side frame inclined in one direction and the opposite end of the upper support frame, and configured to generate a rotational force by a drag force of the wind, and
a second blade connected to both ends of the side frame inclined in an opposite direction and the opposite end of the lower support frame, and configured to generate a rotational force by a drag force of the wind.

2. The wind power generation apparatus of claim 1, wherein the vertex of the lower horizontal frames is located between adjacent vertices of the upper horizontal frames,
the side frames are provided in a zigzag pattern so as to diagonally connect each vertex of the upper horizontal frames and each vertex of the lower horizontal frames, and
one ends of two side frames are connected to each vertex of the upper horizontal frames and opposite ends of two side frames are connected to each vertex of the lower horizontal frames.

3. The wind power generation apparatus of claim 1, wherein the rotary shaft is rotated by the rotational force generated by the drag force of the wind.

4. The wind power generation apparatus of claim 1, wherein the upper support frames, the lower support frames, and the side frames have side surfaces that convexly protrude so as to generate a rotational force by a lift force of the wind.

5. The wind power generation apparatus of claim 3, wherein the blade part further includes:
first and second wires having one ends connected to centers of the first and second blades, respectively;
first and second winding parts provided on the frame part, and to which opposite ends of the first and second wires are connected, respectively;
a wind speed measurement unit for measuring a wind speed; and
a control unit for winding the first wire and the second wire around the first winding part and the second winding part so as to concavely form one side surfaces of the first blade and the second blade, respectively, when the wind speed measured by the wind speed measurement unit is less than or equal to a preset wind speed.

6. The wind power generation apparatus of claim 3, wherein the side frame has a longitudinal cut groove that connects the one end and the opposite end of the side frame,
a coupling groove having a width that is greater than a width of the cut groove is formed inside the cut groove,
a first concavo-convex part having repeated protrusions and recesses is formed on side surfaces of the cut groove, and
a second concavo-convex part coupled to the first concavo-convex part is formed on both side surfaces of the one end of each of the first and second blades so as to be slidably coupled to the cut groove, while a fixing sill slidably coupled to the coupling groove and latched and fixed to the cut groove is formed at the one end of each of the first and second blades.

7. The wind power generation apparatus of claim 5, wherein the blade part further includes:
a first elastic member that connects a first connection point of the first blade connected to the opposite end of the upper support frame and the opposite end of the upper support frame;
a second elastic member that connects a second connection point of the second blade connected to the opposite end of the lower support frame and the opposite end of the lower support frame; and
a rotary motor for rotating the side frames, and
the control unit controls the rotary motor to rotate the side frames in one direction so that the first blade and the second blade are wound around the side frames so as to have reduced areas while the first elastic member and the second elastic member expand, and to rotate the side frames in an opposite direction so that the first elastic member and the second elastic member contract, and the first blade and the second blade are released from the side frames so as to have expanded areas.
